# FASCICULE DE BREVET EUROPEEN

(11) **EP 1 497 582 B1**
(45) Date de publication et mention de la délivrance du brevet: **26.09.2007**
(21) Numéro de dépôt: 03747161.2
(22) Date de dépôt: 24.04.2003
(51) Int. Cl.: F16L 33/207, F16L 37/088, F16L 37/084

(54) **DISPOSITIF DE RACCORDEMENT ETANCHE, EN PARTICULIER POUR UN CIRCUIT D'ADMISSION D'AIR DE MOTEUR DE VEHICULE AUTOMOBILE.**
UNDURCHLÄSSIGE VERBINDUNGSVORRICHTUNG, INSBESONDERE FÜR DAS MOTORLUFTEINLASSSYSTEM EINES KRAFTFAHRZEUGS
IMPERVIOUS CONNECTING DEVICE, IN PARTICULAR FOR THE ENGINE AIR INLET SYSTEM OF A MOTOR VEHICLE

(30) Priorité: 24.04.2002 FR 0205117
(43) Date de publication de la demande: 19.01.2005
(73) Titulaire: HUTCHINSON, 75008 Paris (FR)
(72) Inventeur: GODEAU, Denis, F-45260 Vieilles Maisons (FR); FAILLU, Jean-Luc, F-45700 Villemandeur (FR)
(74) Mandataire: Bolinches, Michel Jean-Marie
(86) Numéro de dépôt international: PCT/FR2003/001300
(87) Numéro de publication internationale: WO 2003/091616

(56) Documents cités:
- EP-A- 0 621 432
- US-A- 4 969 668
- US-A- 5 044 675
- US-A- 5 988 704

## Description

L'invention concerne un dispositif de raccordement étanche, en particulier pour un circuit d'admission d'air de moteur de véhicule automobile, ce dispositif étant destiné à être monté entre un tuyau souple et un embout rigide.

Dans la connectique air actuelle, on utilise essentiellement deux techniques de raccordement.

La première technique de raccordement est basée sur l'utilisation d'un collier de serrage pour fixer une extrémité du tuyau sur l'embout rigide. L'expérience montre que les fonctions étanchéité entre l'embout et le tuyau d'une part et résistance à la traction du tuyau d'autre part, ne peuvent être correctement assurées que par un effort de serrage important du collier sur l'embout.

La seconde technique de raccordement dite connectique rapide est basée sur l'utilisation d'une douille interne et d'une douille externe entre lesquelles une extrémité du tuyau est fixée par sertissage, un organe de verrouillage/déverrouillage assurant la fixation de la douille interne et/ou externe sur l'embout.

L'expérience montre également que les fonctions étanchéité et résistance à la traction ne peuvent être correctement assurées qu'en réalisant une opération de sertissage importante sur la douille interne et/ou externe.

Ces deux techniques de raccordement présentent des inconvénients, en particulier une mise en compression importante du tuyau qui entraîne un fluage du matériau et, à terme, un risque de coupure ou de déchirement du tuyau et une étanchéité défaillante, et un risque de déboîtement du tuyau s'il n'est pas correctement positionné.

Les documents US-4 969 668 et US-5 044 675 décrivent des dispositifs de raccordement étanche selon la seconde technique précitée et qui correspondent au préambule de la revendication 1.

Un but de l'invention est notamment de s'affranchir des inconvénients des techniques de raccordement actuelles en proposant un dispositif de raccordement étanche selon une solution optimisée de la technique dite connectique rapide.

A cet effet, l'invention propose un dispositif de raccordement étanche selon la revendication 1.

Ainsi, les taux de compression pour assurer les fonctions étanchéité et tenue de la traction peuvent être équivalents ou différents mais toujours inférieurs à ceux qui seraient nécessaires pour assurer lesdites fonctions simultanément et non indépendamment, ces taux de compression étant avantageusement inférieurs de 0 à 60% par rapport à ceux obtenus par sertissage par exemple, ce qui permet d'éviter tous les problèmes de détérioration possibles dus à une mise en compression trop importante du tuyau.

D'une manière générale, les taux de compression sont obtenus par une opération de sertissage sur la douille externe, ou suite à une opération de retreint de la douille externe, les matériaux utilisés pouvant être quelconques.

Le profil de l'insert selon l'invention délimite au moins une première zone apte à assurer une fonction étanchéité principale avec le tuyau et une deuxième zone apte à assurer la fonction tenue à la traction du tuyau, la première zone étant située vers la partie d'extrémité interne de l'insert qui est la plus engagée à l'intérieur du tuyau, la deuxième zone étant toujours située après la première zone.

Selon un premier mode de réalisation, l'insert fait saillie au-delà de l'extrémité libre du tuyau, l'extrémité libre du tuyau s'étend au-delà de la bague externe, et la bague externe s'étend sur une longueur axiale inférieure à celle de l'insert de manière à ce que l'insert délimite une troisième zone apte à assurer une fonction de décompression de l'extrémité du tuyau pour faciliter et améliorer la tenue en traction.

Selon un deuxième mode de réalisation, l'insert fait saillie au-delà de l'extrémité du tuyau pour délimiter une troisième zone apte à assurer une fonction de décompression de l'extrémité du tuyau pour faciliter et améliorer la tenue en traction, et la bague externe s'étend sur une longueur inférieure ou au moins égale à la longueur des trois zones.

D'une manière générale, la zone de retenue à la traction du tuyau s'étend sensiblement sur toute la longueur de la bague externe, et l'insert porte des moyens complémentaires pour renforcer la tenue à la traction du tuyau, ces moyens étant situés en regard de la bague externe.

A titre d'exemple, les moyens complémentaires de retenue à la traction du tuyau sont constitués par un bossage périphérique ou des pattes, ces moyens étant venus d'une seule pièce avec l'insert ou réalisés après.

Selon un exemple de réalisation, la première zone de l'insert apte à assurer la fonction étanchéité principale avec le tuyau présente au moins un bossage qui délimite une gorge, la paroi externe du fond de la gorge est destinée à venir au contact du tuyau, et la gorge délimitée par le bossage est destinée à recevoir un joint apte à assurer la fonction étanchéité avec l'embout, le joint d'étanchéité pouvant être rapporté ou surmoulé dans la gorge.

Selon un autre exemple de réalisation, la première zone de l'insert apte à assurer la fonction étanchéité principale avec le tuyau présente un profil ondulé apte à définir au moins deux gorges adjacentes dont une gorge située vers l'extrémité interne de l'insert, la paroi externe du fond de la gorge d'extrémité est destinée à venir en contact serré et étanche avec le tuyau, et le tuyau est destiné à pénétrer au moins en partie à l'intérieur de l'autre gorge, et la gorge d'extrémité est destinée à recevoir un joint apte à assurer la fonction étanchéité avec l'embout, ce joint d'étanchéité pouvant être rapporté ou surmoulé dans la gorge d'extrémité de l'insert, et un autre joint d'étanchéité est destiné à être monté dans ladite autre gorge.

D'une manière générale, l'insert peut être réalisé en un matériau quelconque tel que l'acier inoxydable, l'aluminium ou une matière plastique ou thermodurcissable.

Un dispositif de raccordement étanche selon l'invention présente de nombreux avantages parmi lesquels on peut notamment citer : un dispositif compact à montage rapide et simple, une étanchéité et une résistance à la traction optimisées et sans risque de détérioration des différents composants, une utilisation avec des tuyaux en différents matériaux et de différentes épaisseurs, la possibilité d'utilisation de joints d'étanchéité surmoulés, et son montage sur un embout standard.

D'autres avantages, caractéristiques et détails de l'invention ressortiront du complément de description qui va suivre en référence à des dessins annexés, donnés uniquement à titre d'exemple et dans lesquels :
- la figure 1 est une demi-vue en coupe axiale d'un mode de réalisation de base d'un dispositif de raccordement étanche selon l'invention qui comprend au moins une douille et un insert entre lesquels est emprisonné une partie d'extrémité d'un tuyau à raccorder sur un embout et blocage en position par un organe de verrouillage/déverrouillage ;
- les figures 2 et 2a sont deux demi-vues en coupe axiale d'un premier mode de réalisation optimisé et d'une variante d'un dispositif de raccordement étanche selon l'invention ;
- la figure 3 est une demi-vue en coupe axiale d'un deuxième mode de réalisation d'un dispositif de raccordement étanche selon l'invention ;
- la figure 4 est une demi-vue en coupe axiale d'un troisième mode de réalisation optimisé d'un dispositif de raccordement étanche selon l'invention ;
- les figures 5 à 7 sont des demi-vues en coupe axiale de plusieurs variantes de l'insert d'un dispositif de raccordement étanche selon l'invention ;
- la figure 8 est une demi-vue en coupe partielle de l'insert et de l'embout pour illustrer la forme d'un joint d'étanchéité montés entre eux ;
- la figure 8a est une demi-vue en coupe d'une autre forme de réalisation du joint d'étanchéité de la figure 8 ; et
- les figures 9a et 9b sont des vues en bout d'un dispositif de verrouillage/déverrouillage du dispositif de raccordement selon l'invention.

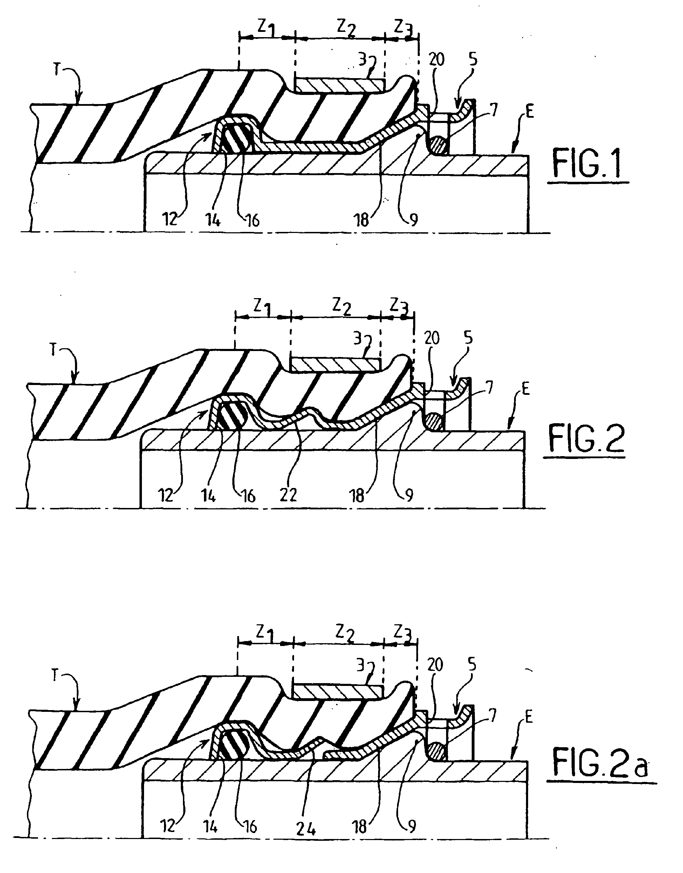

Un dispositif de raccordement étanche 1 selon l'invention est illustré à la figure 1 selon un mode de réalisation de base pour raccorder un tuyau souple T sur un embout rigide E. D'une façon connue en soi dans la connectique air dite rapide, le dispositif de raccordement 1 comprend notamment une douille externe 3 et une douille interne ou insert 5 entre lesquels est emprisonnée une partie d'extrémité du tuyau T. Le dispositif de raccordement 1 comprend également un organe de verrouillage/déverrouillage 7 pour immobiliser axialement l'embout E.

Dans les modes de réalisation qui vont être décrits, le tuyau T est fixé entre la douille externe 3 et l'insert interne 5 par une opération de sertissage, mais cela n'est qu'un exemple, tout autre opération équivalente pour obtenir un résultat de même nature pouvant être envisagée.

D'une manière générale, le dispositif de raccordement 1 doit être apte à réaliser au moins une fonction étanchéité entre l'insert 5 et le tuyau T, une fonction étanchéité entre l'insert 5 et l'embout E, et une fonction retenue à la traction du tuyau T. Selon l'invention, ces trois fonctions sont réalisées simultanément mais indépendamment les unes des autres en donnant un profil particulier à l'insert 5.

Selon le mode de réalisation de base tel qu'illustré à la figure 1, le profil de l'insert 5 permet de différentier au moins deux zones, à savoir : une zone Z₁ destinée à assurer une fonction étanchéité principale avec le tuyau T, et une zone Z₂ de tenue à la traction du tuyau T, ces deux zones pouvant éventuellement se chevaucher en partie.

D'une manière générale, l'extrémité libre du tuyau T fait saillie au-delà de la bague externe 3, et cette bague 3 s'étend sur une longueur inférieure à celle de l'insert 5. Par ailleurs, l'insert 5 ne pénètre qu'en partie à l'intérieur du tuyau T, et sa partie externe est destinée à supporter l'organe de verrouillage/déverrouillage 7 qui est destiné à coopérer avec un bossage périphérique 9 de l'embout E. Enfin, l'embout E peut être un embout standard autre qu'un embout à bulbe.

La zone Z₁ de l'insert 5 destinée à assurer la fonction étanchéité principale avec le tuyau T est toujours située vers l'extrémité interne de l'insert 5 qui est engagée à l'intérieur du tuyau T, de sorte que la deuxième zone Z₂ de tenue à la traction du tuyau T est toujours située après la première zone Z₁ assurant l'étanchéité. La zone Z₁ comprend au moins un bossage 12 destiné à venir en contact serré et étanche avec le tuyau T. Le bossage 12 délimite une gorge annulaire 14 dont le fond est destinée à venir au contact du tuyau T. Par ailleurs, cette gorge 14 est destinée à recevoir un joint 16 rapporté ou surmoulé et apte à assurer l'étanchéité avec l'embout E. Le joint 16 peut être un joint torique, un joint à plusieurs lobes ou tout autre joint spécifique.

La zone Z₂ de l'insert 5 destinée à assurer la fonction tenue à la traction du tuyau T s'étend sensiblement sur toute la longueur de la douille externe 3, et la partie d'extrémité libre du tuyau T qu fait saillie au-delà de la bague 3 forme avantageusement une zone Z₃ de décompression qui facilite et améliore la tenue en traction et qui peut être de longueur variable.

L'insert 5 comprend également une rampe 18 vers son extrémité externe pour former une butée destinée à venir au contact du bossage périphérique 9 de l'embout E afin de limiter le degré de pénétration de l'embout E à l'intérieur de l'insert 5. Vers son extrémité externe, l'insert 5 présente au moins une ouverture 20 qui sert à positionner l'organe de verrouillage/déverrouillage 7 de manière à ce que cet organe 7 vienne en appui derrière le bossage 9 de l'embout E pour immobiliser axialement l'embout E. L'organe de verrouillage/déverrouillage 7 peut être réalisé sous la forme d'une épingle ou d'un ressort à lame par exemple. En variante, la butée 18 peut être réalisée par un épaulement ou par au moins une patte en saillie à la paroi interne de l'insert 5.

Selon un premier mode de réalisation optimisé du dispositif de raccordement étanche selon l'invention et tel qu'illustré à la figure 2, l'insert 2 comprend également des moyens complémentaires pour renforcer la fonction tenue à la traction du tuyau T. Ces moyens sont situés en regard de la bague externe 3 et en saillie à la surface périphérique de l'insert 5. A titre d'exemple, ces moyens sont constitués par au moins un bossage périphérique 22 venu d'une seule pièce avec l'insert 5 pour comprimer au moins localement et plus fortement le tuyau T entre la douille 3 et l'insert 5. Dans la variante de réalisation illustrée à la figure 2a, les moyens sont constitués par des pattes 24 qui peuvent être venues d'une seule pièce avec l'insert 5 ou réalisées après par une opération de découpe.

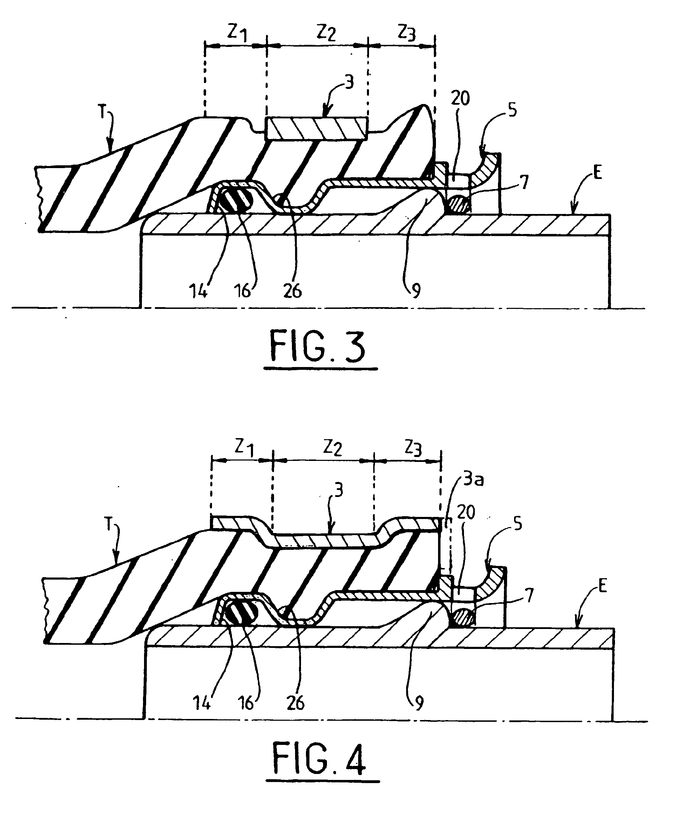

Selon un deuxième mode de réalisation optimisé du dispositif de raccordement étanche selon l'invention et tel qu'illustré à la figure 3, la partie d'extrémité interne de l'insert 5 présente une forme ondulée, sensiblement en S dans le sens axial, pour délimiter au moins deux gorges annulaires 14 et 26. La gorge 14, adjacente à l'extrémité interne de l'insert 5, joue la même fonction que la gorge 14 du premier mode de réalisation illustré à la figure 2, alors que la gorge 26 est apte à être au moins en partie comblée par le tuyau T. Avantageusement, la gorge 26 est située en regard de la douille externe 3 pour forcer le tuyau T à pénétrer dans ladite gorge. Ce deuxième mode de réalisation est plus particulièrement adapté au cas d'un tuyau T de faible épaisseur, mais la zone Z₂ de l'insert 5 assure la tenue de la traction du tuyau T peut être également renforcée par des moyens complémentaires du type de ceux illustrés à la figure 2 ou 2a.

Selon un troisième mode de réalisation illustré à la figure 4, la bague externe 3 s'étend sur une longueur sensiblement égale à la longueur des trois zones Z₁ (étanchéité), Z₂ (tenue à la traction) et Z₃ (décompression), et présente donc des diamètres différents après l'opération de sertissage sachant que le plus petit diamètre correspond à la zone Z₂ de tenue à la traction. La bague externe 3 peut présenter un rebord interne 3a à une extrémité qu forme une butée contre laquelle vient en appui l'extrémité libre du tuyau T. Cette forme de bague 3 peut être également prévue dans les modes de réalisation des figures 2 et 2a.

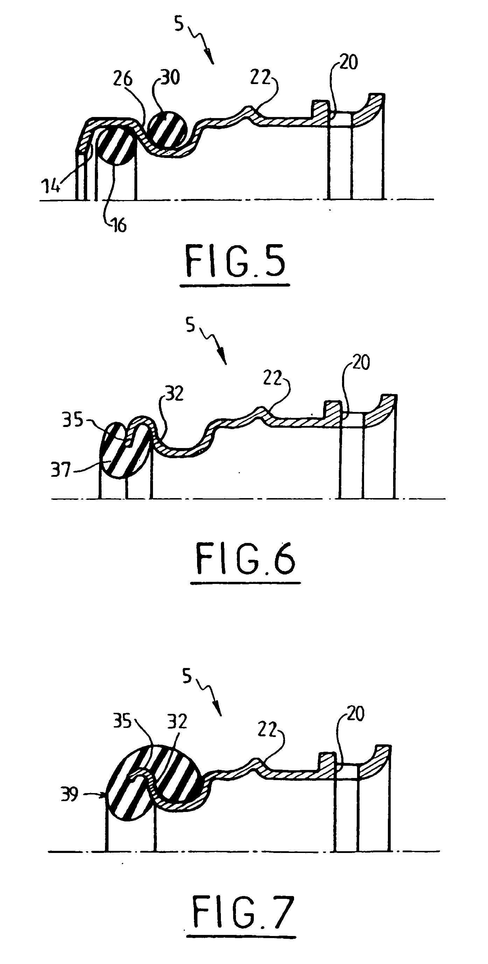

Sur la figure 5, on a repris la forme de l'insert 5 des figures 3 et 4, mais avec la présence d'un joint 30 dans la gorge 26 pour renforcer l'étanchéité avec le tuyau T, ce qui est avantageux dans le cas d'un tuyau T de faible épaisseur.

Dans une autre forme de réalisation illustrée partiellement à la figure 6, la partie d'extrémité interne de l'insert 5 présente une gorge 32 annulaire apte à être au moins en partie comblée par le tuyau T qui se prolonge par un rebord périphérique 35 replié vers l'intérieur et sur lequel est rapporté un joint moulé 37 qui assure l'étanchéité avec l'embout E.

Enfin, dans une autre variante de réalisation de la figure 6 et telle qu'illustrée à la figure 7, un double joint moulé 39 est rapporté sur le rebord périphérique 35 de la gorge 32 pour assurer une étanchéité avec le tuyau T d'une part et l'embout E d'autre part.

A titre d'exemple, le tuyau T a un diamètre intérieur de l'ordre de 44mm et une épaisseur de l'ordre de 1mm à 5mm, l'insert 5 s'étend sur une longueur de l'ordre de 37mm, la douille externe s'étend sur une longueur de l'ordre de 10mm, et l'embout E a un diamètre extérieur de l'ordre de 42mm.

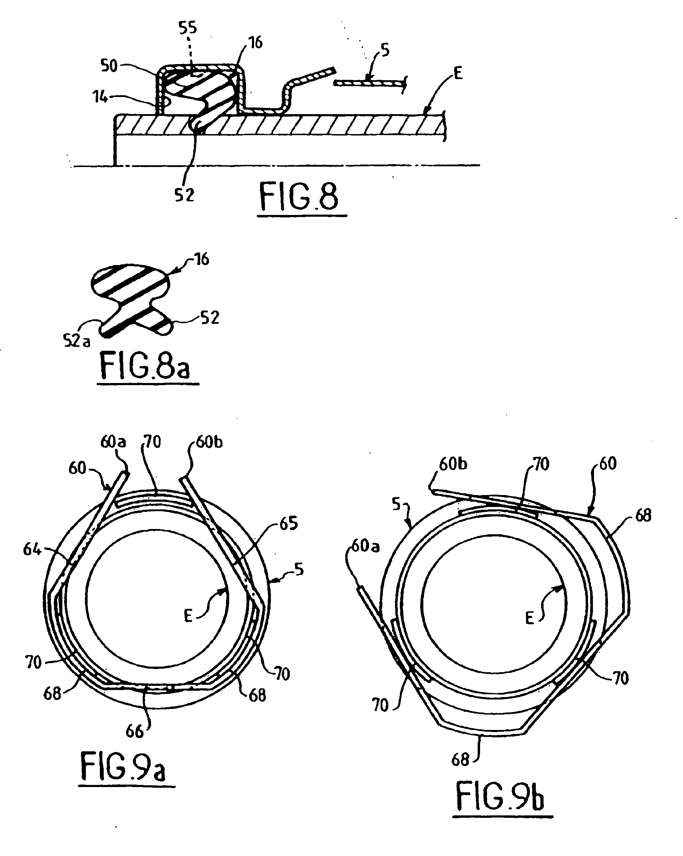

D'une manière générale, le joint d'étanchéité 16 qui est logé dans la gorge 14 de l'insert 5 peut être avantageusement un joint annulaire à lèvre à la place d'un joint torique. Un tel joint 16 à lèvre est illustré à titre d'exemple sur la figure 8 et comprend un corps 50 qui se loge dans la cavité 14 de l'insert 5, et une lèvre d'étanchéité 52 apte à venir en contact étanche avec l'embout E. Le corps 50 du joint 16 peut avoir une surface de contact avec le fond de la gorge 14 qui présente une ou plusieurs ondulations 55 illustrées en traits pointillés sur la figure 8. En variante, le joint d'étanchéité 16 peut présenter au moins deux lèvres 52 et 52a comme cela est illustré sur la figure 8a.

Par ailleurs, l'organe de verrouillage/déverrouillage 7 peut être constitué par une épingle 60 qui peut avantageusement avoir la forme de celle illustrée aux figures 9a et 9b, et qui vient se monter dans l'ouverture 20 de l'insert 5 (figures 1 à 4). Cette épingle 60 présente l'avantage de passer d'une position de verrouillage de l'embout E (figure 9a) à une position de déverrouillage (figure 9b) dudit embout E par une simple opération de rotation dans son plan de l'épingle 60. A cet effet, l'épingle 60 est constituée par un élément filaire ayant deux extrémités libres 60a et 60b qui sont réunies l'une à l'autre par une forme géométrique globalement triangulaire. Plus précisément, la forme géométrique de l'épingle 60 présente trois brins sensiblement rectilignes 64, 65 et 66, les brins 64 et 65 partant des deux extrémités 60a et 60b, qui sont reliés par deux brins intermédiaires 68 légèrement arqués. L'insert 5 présente trois surfaces en saillie ou nervures 70 à son extrémité libre et aptes à coopérer sélectivement avec l'épingle 60.

Dans le cas de la figure 9a ou position de verrouillage, le cercle inscrit par les trois brins rectilignes 64, 65 et 66 de l'épingle 60 a un diamètre intérieur qui est inférieur au diamètre extérieur de l'embout E de manière à venir en contact avec celui-ci pour le bloquer axialement contre le bossage périphérique 9 de l'embout E. Concrètement, les brins rectilignes 64, 65 et 66 ne sont globalement pas en contact avec les nervures 70 de l'insert 5.

Par contre, dans le cas de la figure 9b ou position de verrouillage, on a fait subir à l'épingle 60 une rotation de manière à ce que les brins rectilignes 64, 65 et 66 de l'épingle 60 viennent en contact avec les surfaces 70 de l'insert 5, de manière à élargir l'épingle 60 pour qu'elle ne soit plus en contact avec l'embout E qui peut être ainsi retiré du dispositif de raccordement ou monté dans celui-ci.

Bien entendu, les domaines d'application de l'invention ne sont pas limités à des circuits d'admission d'air de moteur de véhicule automobile.

## Revendications

1. Dispositif de raccordement étanche, en particulier pour un circuit d'admission d'air de moteur de véhicule automobile, entre un tuyau souple (T) et un embout rigide (E), ce dispositif de raccordement comprenant au moins un insert interne (5) et une douille externe (3) entre lesquels est emprisonnée par compression une partie d'extrémité du tuyau (T), le profil de l'insert (5) présentant un bossage (12) définissant au moins une première zone (Z₁) apte à assurer une fonction d'étanchéité entre l'insert (5) et le tuyau (T) d'une part, et un moyen d'étanchéité (16) logé dans le bossage (12) pour assurer une fonction étanchéité entre l'insert (5) et l'embout (E) d'autre part, et une deuxième zone (Z₂) apte à assurer la fonction tenue à la traction du tuyau (T), et un organe de verrouillage/déverrouillage (7) de l'embout (E), **caractérisé en ce que** la première zone (Z₁) est toujours située vers la partie d'extrémité interne de l'insert (5) qui est la plus engagée à l'intérieur du tuyau (T), et **en ce que** la première zone (Z₁) est située à l'extérieur de la douille (3).

2. Dispositif de raccordement selon la revendication 1, dans lequel les taux de compression pour assurer les fonctions étanchéité et tenue à la traction sont équivalents ou différents mais toujours inférieurs à ceux qui seraient nécessaires pour assurer lesdites fonctions simultanément et non indépendamment.

3. Dispositif de raccordement selon la revendication 2, dans lequel les taux de compression sont inférieurs à ceux nécessaires pour assurer lesdites fonctions simultanément et non indépendamment, ces taux de compression étant inférieurs de 0 à 60% par rapport à ceux obtenus par sertissage par exemple.

4. Dispositif de raccordement selon l'une des revendications précédentes, dans lequel la deuxième zone (Z₂) de retenue à la traction du tuyau (T) s'étend sensiblement sur toute la longueur de la bague externe (3), et l'insert (5) porte des moyens complémentaires pour renforcer la tenue à la traction du tuyau (T), ces moyens étant situés en regard de la bague externe (3).

5. Dispositif de raccordement selon la revendication 4, dans lequel les moyens complémentaires de retenue à la traction du tuyau (T) sont constitués par des moyens en saillie à la surface périphérique de l'insert (5).

6. Dispositif de raccordement selon la revendication 4, dans lequel les moyens complémentaires de retenue à la traction du tuyau (T) sont constitués par au moins un bossage périphérique (32) à section droite en forme de dent.

7. Dispositif de raccordement selon la revendication 6, dans lequel le bossage périphérique (32) est venu d'une seule pièce avec l'insert (5).

8. Dispositif de raccordement selon la revendication 4, dans lequel les moyens complémentaires de retenue à la traction du tuyau (T) comprennent au moins une dent (24) découpée dans l'insert (5).

9. Dispositif de raccordement selon l'une des revendications précédentes, dans lequel l'insert (5) fait saillie au-delà de l'extrémité libre du tuyau (T), l'extrémité libre du tuyau (T) s'étend au-delà de la bague externe (3), et la bague externe s'étend sur une longueur axiale inférieure à celle de l'insert (5) de manière à ce que l'insert (5) délimite une troisième zone (Z₃) apte à assurer une fonction de décompression de l'extrémité du tuyau (T) pour faciliter et améliorer la tenue en traction.

10. Dispositif de raccordement selon l'une des revendications 1 à 8, dans lequel l'insert (5) fait saillie au-delà de l'extrémité du tuyau (T) pour délimiter une troisième zone (Z₃) apte à assurer une fonction de décompression de l'extrémité du tuyau (T) pour faciliter et améliorer la tenue en traction, et la bague externe (3) s'étend sur une longueur inférieure à la longueur des trois zones (Z₁, Z₂, Z₃).

11. Dispositif de raccordement selon l'une des revendications précédentes, dans lequel la première zone (Z₁) de l'insert (5) apte à assurer la fonction étanchéité principale avec le tuyau (T) présente au moins un bossage (12) qui délimite une gorge annulaire (14) destinée à recevoir le moyen d'étanchéité (16) apte à assurer la fonction étanchéité avec l'embout (E), et la paroi externe du fond de la gorge (14) est destinée à venir au contact du tuyau (T).

12. Dispositif de raccordement selon la revendication 11, dans lequel le moyen d'étanchéité (16) est un joint surmoulé dans la gorge (14).

13. Dispositif de raccordement selon l'une quelconque des revendications précédentes, dans lequel la première zone (Z₁) de l'insert (5) apte à assurer la fonction étanchéité principale avec le tuyau (T) présente un profil ondulé apte à définir au moins deux gorges annulaires adjacentes (14, 26) dont une gorge (14) située vers l'extrémité interne de l'insert (5).

14. Dispositif de raccordement selon la revendication 13, dans lequel la paroi externe du fond de la gorge d'extrémité (14) est destinée à venir en contact serré et étanche avec le tuyau (T), et le tuyau (T) est destiné à pénétrer au moins en partie à l'intérieur de l'autre gorge (26).

15. Dispositif de raccordement selon la revendication 14, dans lequel la gorge d'extrémité (14) est destinée à recevoir le moyen d'étanchéité (16) apte à assurer la fonction étanchéité avec l'embout (E).

16. Dispositif de raccordement selon la revendication 15, dans lequel le moyen d'étanchéité (16) est surmoulé dans la gorge d'extrémité (14) de l'insert (5).

17. Dispositif de raccordement selon l'une des revendications 14 à 16, dans lequel un moyen d'étanchéité (30) est destiné à être monté dans ladite autre gorge (26).

18. Dispositif de raccordement selon la revendication 11, dans lequel le moyen d'étanchéité (16) est un joint à lèvre(s).

19. Dispositif de raccordement selon la revendication 18, dans lequel le moyen d'étanchéité (16) présente un corps (50) qui se loge dans la cavité (14) de l'insert (5), et au moins une lèvre (52) apte à venir en contact étanche avec l'embout (E).

20. Dispositif de raccordement selon la revendication 19, dans lequel le corps (50) du joint (16) a une surface de contact avec le fond de la gorge (14) de l'insert (5) qui présente une ou plusieurs ondulations (55).

21. Dispositif de raccordement selon l'une des revendications précédentes, dans lequel l'organe de verrouillage/déverrouillage (7) de l'embout (E) est actionnable en rotation pour passer d'une position de verrouillage à une position de déverrouillage et *vice versa.*

22. Dispositif de raccordement selon la revendication 21, dans lequel l'organe de verrouillage/déverrouillage (7) est constitué par une épingle (60) de forme globalement triangulaire avec trois brins (64, 65, 66) sensiblement rectilignes réunis par deux brins intermédiaires légèrement arqués (68).

23. Dispositif de raccordement selon la revendication 22, dans lequel les trois brins (64, 65, 66) de l'épingle (60) coopèrent avec trois nervures (70) de l'insert (5) pour élargir ou non l'épingle (60).

24. Dispositif de raccordement selon l'une des revendications précédentes, dans lequel le tuyau (T) a un diamètre intérieur de l'ordre de 44mm et une épaisseur de l'ordre de 1 mm à 5mm, l'insert (5) s'étend sur une longueur de l'ordre de 37mm, la bague externe (3) s'étend sur une longueur de l'ordre de 10mm, et l'embout (E) a un diamètre extérieur de l'ordre de 42mm.

## Claims

1. Impervious connecting device, in particular for the engine air inlet system of a motor vehicle, between a flexible hose (T) and a rigid endpiece (E), this connecting device comprising at least one internal insert (5) and an external sleeve (3) between which an end part of the hose (T)is trapped by compression, the profile of the insert (5) having a protuberance (12) that defines at least one first zone (Z₁) adapted to provide a sealing function between the insert (5) and the hose (T) on the one hand, and a sealing means (16) housed in the protuberance (12) for providing a sealing function between the insert (5) and the endpiece (E) on the other hand, and a second zone (Z₂) adapted to perform the function of providing resistance to tensioning of the hose (T), and a locking/unlocking member (7) for the endpiece (E), **characterised in that** the first zone (Z₁) is always located towards the inner end part of the insert (5) which is most fully engaged in the hose (T), and **in that** the first zone (Z₁) is located outside the sleeve (3).

2. Connecting device according to claim 1, wherein the compression levels for providing the sealing and the resistance to tensioning functions are equivalent or different but are always less than those that would be needed to provide said functions simultaneously and not independently.

3. Connecting device according to claim 2, wherein the compression levels are less than those needed to provide said functions simultaneously and not independently, these compression levels being lower by 0 to 60% with respect to those obtained by crimping, for example.

4. Connecting device according to one of the preceding claims, wherein the second zone (Z₂) for providing resistance to tensioning of the hose (T) extends over substantially the entire length of the outer ring (3), and the insert (5) carries complementary means for strengthening the resistance to tensioning of the hose (T), these means being located facing the outer ring (3).

5. Connecting device according to claim 4, wherein the complementary means for providing resistance to tensioning of the hose (T) consist of means projecting from the peripheral surface of the insert (5).

6. Connecting device according to claim 4, wherein the complementary means for providing resistance to tensioning of the hose (T) consist of at least one peripheral protuberance (32) of tooth-shaped cross-section.

7. Connecting device according to claim 6, wherein the peripheral protuberance (32) is formed in one piece with the insert (5).

8. Connecting device according to claim 4, wherein the complementary means for providing resistance to tensioning of the hose (T) comprise at least one tooth (24) cut out from the insert (5).

9. Connecting device according to one of the preceding claims, wherein the insert (5) projects beyond the free end of the hose (T), the free end of the hose (T) extends beyond the outer ring (3), and the outer ring extends over an axial length which is less than that of the insert (5), so that the insert (5) delimits a third zone (Z₃) adapted to perform a function of decompression of the end of the hose (T) to assist with and improve the resistance to tensioning.

10. Connecting device according to one of claims 1 to 8, wherein the insert (5) projects beyond the end of the hose (T), in order to define a third zone (Z₃) adapted to perform a function of decompression of the end of the hose (T) to assist with and improve the resistance to tensioning, and the outer ring (3) extends over a length which is less than the length of the three zones (Z₁, Z₂, Z₃).

11. Connecting device according to one of the preceding claims, wherein the first zone (Z₁) of the insert (5) adapted to perform the main sealing function with the hose (T) has at least one protuberance (12) which delimits an annular groove (14) intended to accommodate the sealing means (16) adapted to perform the sealing function with the endpiece (E), and the outer wall of the base of the groove (14) is adapted to come into contact with the hose (T).

12. Connecting device according to claim 11, wherein the sealing means (16) is a seal moulded onto the groove (14).

13. Connecting device according to one of the preceding claims, wherein the first zone (Z₁) of the insert (5) adapted to perform the main sealing function with the hose (T) has an undulating profile adapted to define at least two adjacent annular grooves (14, 26) one groove (14) of which is located towards the inner end of the insert (5).

14. Connecting device according to claim 13, wherein the outer wall of the base of the end groove (14) is intended to come into close and leaktight contact with the hose (T), and the hose (T) is adapted to penetrate at least partly inside the other groove (26).

15. Connecting device according to claim 14, wherein the end groove (14) is intended to receive the sealing means (16) adapted to perform the sealing function with the endpiece (E).

16. Connecting device according to claim 15, wherein the sealing means (16) is moulded over the end groove (14) of the insert (5).

17. Connecting device according to one of claims 14 to 16, wherein a sealing means (30) is intended to be mounted in said other groove (26).

18. Connecting device according to claim 11, wherein the sealing means (16) is a lip seal.

19. Connecting device according to claim 18, wherein the sealing means (16) comprise a body (50) which is accommodated in the cavity (14) of the insert (5), and at least one lip (52) adapted to make leaktight contact with the endpiece (E).

20. Connecting device according to claim 19, wherein the body (50) of the seal (16) has a contact surface with the base of the groove (14) of the insert (5) that has one or more undulations (55).

21. Connecting device according to one of the preceding claims, wherein the locking/unlocking member (7) of the endpiece (E) can be actuated to rotate in order to move from a locking position to an unlocking position and *vice versa.*

22. Connecting device according to claim 21, wherein the locking/unlocking member (7) consists of a pin (60) of overall triangular shape with three substantially rectangular legs (64, 65, 66) joined together by two slightly curved intermediate legs (68).

23. Connecting device according to claim 22, wherein the three legs (64, 65, 66) of the pin (60) cooperate with three ribs (70) of the insert (5) in order to widen or not widen the pin (60).

24. Connecting device according to one of the preceding claims, wherein the hose (T) has an internal diameter of the order of 44 mm and a thickness of the order of 1 mm to 5 mm, the insert (5) extends over a length of the order of 37 mm, the outer ring (3) extends over a length of the order of 10 mm, and the endpiece (E) has an outer diameter of the order of 42 mm.

## Patentansprüche

1. Vorrichtung zur abddichtenden Verbindung, insbesondere für eine Lufteinlassleitung eines Kraftfahrzeugs, zwischen einem flexiblen Schlauch (T) und einem starren Ansatzstück (E), wobei diese Verbindungsvorrichtung umfasst: wenigstens einen internen Einsatz (5) und einen externen Ring (3), zwischen welchen durch Kompression ein Endstück des Schlauches (T) festgesetzt ist, wobei das Profil des Einsatzes (5) aufweist: einen Buckel (12), welcher wenigstens einen ersten Bereich (Z₁) definiert, welcher dazu ausgestaltet ist, auf der einen Seite eine Dichtungsfunktion zwischen dem Einsatz (5) und dem Schlauch (T) zu gewährleisten, und ein Dichtungsmittel (16), welches in dem Buckel (12) untergebracht ist, um auf der anderen Seite eine Dichtungsfunktion zwischen dem Einsatz (5) und dem Ansatzstück (E) zu gewährleisten, und einen zweiten Bereich (Z₂), um die Zughalterungsfunktion des Schlauches (T) zu gewährleisten, und ein Verriegelungs-/Entriegelungsorgan (7) des Ansatzstücks (E), **dadurch gekennzeichnet, dass** der erste Bereich (Z₁) stets in Richtung des internen Endteils des Einsatzes (5) gelegen ist, welches am weitesten im Eingriff mit dem Inneren des Schlauchs (T) ist, und dass der erste Bereich (Z₁) an der Außenseite des Rings (3) gelegen ist.

2. Verbindungsvorrichtung nach Anspruch 1, wobei die Kompressionsraten, um die Dichtungs- und Zugfestigkeitsfunktionen zu gewährleisten, gleich oder verschieden sind, jedoch stets geringer als diejenigen, welche nötig wären, um diese Funktionen gleichzeitig und nicht unabhängig zu gewährleisten.

3. Verbindungsvorrichtung nach Anspruch 2, wobei die Kompressionsraten geringer sind als diejenigen, welche notwendig sind, um die Funktionen gleichzeitig und nicht unabhängig zu gewährleisten, wobei diese Kompressionsraten geringer als 0 bis 60% im Verhältnis zu denjenigen sind, welche beispielsweise durch Bördeln erhalten werden.

4. Verbindungsvorrichtung nach einem der vorhergehenden Ansprüche, wobei der zweite Bereich (Z₂) zur Zughalterung des Schlauches (T) sich im Wesentlichen über die gesamte Länge des externen Rings (3) erstreckt, und der Einsatz (5) komplementäre Mittel trägt, um die Zughalterung des Schlauches (T) zu verstärken, wobei diese Mittel sich gegenüber dem externen Ring (3) befinden.

5. Verbindungsvorrichtung nach Anspruch 4, wobei die komplementären Mittel zur Zughalterung des Schlauches (T) gebildet sind durch über die Umfangsfläche des Einsatzes (5) hervorstehende Mittel.

6. Verbindungsvorrichtung nach Anspruch 4, wobei die komplementären Mittel zur Zughalterung des Schlauches (T) gebildet sind durch wenigstens einen Umfangsbuckel (32) mit zackenförmigem Querschnitt.

7. Verbindungsvorrichtung nach Anspruch 6, wobei der Umfangsbuckel (32) mit dem Einsatz (5) aus einem einzigen Stück entstammt.

8. Verbindungsvorrichtung nach Anspruch 4, wobei die komplementären Mittel zur Zughalterung des Schlauches (T) wenigstens einen in den Einsatz (5) geschnittenen Zacken (24) umfassen.

9. Verbindungsvorrichtung nach einem der vorhergehenden Ansprüche, wobei der Einsatz (5) jenseits des freien Endes des Schlauches (T) hervorsteht, wobei das freie Ende des Schlauches (T) sich jenseits des externen Rings (3) erstreckt, und wobei der externe Ring sich über eine axiale Länge erstreckt, welche geringer ist als diejenige des Einsatzes (5), so dass der Einsatz (5) einen dritten Bereich (Z₃) begrenzt, welcher dazu ausgestaltet ist, eine Dekompressionsfunktion für das Ende des Schlauchs (T) zu gewährleisten, um die Zughalterung zu erleichtern und zu verbessern.

10. Verbindungsvorrichtung nach einem der Ansprüche 1-8, wobei der Einsatz (5) jenseits des Endes des Schlauchs (T) hervorsteht, um einen dritten Bereich (Z₃) zu begrenzen, welcher dazu ausgestaltet ist, eine Dekompressionsfunktion für das Ende des Schlauchs (T) zu gewährleisten, um die Zughalterung zu erleichtern und zu verbessern, und der externe Ring (3) sich über eine Länge erstreckt, welche geringer ist als die Länge der drei Bereiche (Z₁, Z₂, Z₃).

11. Verbindungsvorrichtung nach einem der vorhergehenden Ansprüche, wobei der erste Bereich (Z₁) des Einsatzes (5), welcher dazu ausgestaltet ist, die Hauptdichtungsfunktion zu dem Schlauch (T) zu gewährleisten, wenigstens einen Buckel (12) aufweist, welcher eine ringförmige Kehle (14) begrenzt, welche dazu bestimmt ist, dass Dichtungsmittel (16) aufzunehmen, welches dazu ausgestaltet ist, die Dichtungsfunktion zu dem Ansatzstück (E) zu gewährleisten, und die externe Wand der Kehle (14) dazu bestimmt ist, in Kontakt mit dem Schlauch (T) zu kommen.

12. Verbindungsvorrichtung nach Anspruch 11, wobei das Dichtungsmittel (16) eine in der Kehle (14) aufgeformte Dichtung ist.

13. Verbindungsvorrichtung nach einem der vorhergehenden Ansprüche, wobei der erste Bereich (Z₁) des Einsatzes (5), welcher dazu ausgestaltet ist, die Hauptdichtungsfunktion zu dem Schlauch (T) zu gewährleisten, ein gewelltes Profil aufweist, welches dazu ausgestaltet ist, wenigstens zwei benachbarte ringförmige Kehlen (14, 26) zu definieren, von welchen eine Kehle (14) in Richtung des internen Endes des Einsatzes (5) gelegen ist.

14. Verbindungsvorrichtung nach Anspruch 13, wobei die externe Wand des Bodens der Endkehle (14) dazu bestimmt ist, in engen und abdichtenden Kontakt mit dem Schlauch (T) zu kommen, und der Schlauch (T) dazu bestimmt ist, wenigstens teilweise in das Innere der anderen Kehle (26) einzudringen.

15. Verbindungsvorrichtung nach Anspruch 14, wobei die Endkehle (14) dazu bestimmt ist, das Dichtungsmittel (16) aufzunehmen, welches dazu ausgestaltet ist, die Dichtungsfunktion zu dem Ansatzstück (E) zu gewährleisten.

16. Verbindungsvorrichtung nach Anspruch 15, wobei das Dichtungsmittel (16) in der Endkehle (14) des Einsatzes (5) aufgeformt ist.

17. Verbindungsvorrichtung nach einem der Ansprüche 14-16, wobei ein Dichtungsmittel (30) dazu bestimmt ist, in der anderen Kehle (26) angebracht zu werden.

18. Verbindungsvorrichtung nach Anspruch 11, wobei das Dichtungsmittel (16) eine Lippendichtung ist.

19. Verbindungsvorrichtung nach Anspruch 18, wobei das Dichtungsmittel (16) einen Körper (50), welcher in dem Hohlraum (14) des Einsatzes (5) aufgenommen ist, und wenigstens eine Lippe (52), welche dazu ausgestaltet ist, in abdichtenden Kontakt mit dem Ansatzstück (E) zu kommen, aufweist.

20. Verbindungsvorrichtung nach Anspruch 19, wobei der Körper (50) der Dichtung (16) eine Kontaktfläche zu dem Boden der Kehle (14) des Einsatzes (5) aufweist, welche eine oder mehrere Welligkeiten (55) aufweist.

21. Verbindungsvorrichtung nach einem der vorhergehenden Ansprüche, wobei das Verriegelungs-/Entriegelungsorgan (7) des Ansatzstücks (E) durch Rotation betätigbar ist, um aus einer Verriegelungsposition in eine Entriegelungsposition zu wechseln und umgekehrt.

22. Verbindungsvorrichtung nach Anspruch 21, wobei das Verriegelungs-/Entriegelungsorgan (7) gebildet ist durch eine Nadel (60) von allgemein dreieckiger Form mit drei im Wesentlichen geradlinigen Stückchen (64, 65, 66), welche durch zwei leicht bogenförmige Zwischenstückchen (68) verbunden sind.

23. Verbindungsvorrichtung nach Anspruch 22, wobei die drei Stückchen (64, 65, 66) der Nadel (60) mit drei Rippen (70) des Einsatzes (5) zusammenwirken, um die Nadel (60) zu verbreitern oder nicht.

24. Verbindungsvorrichtung nach einem der vorhergehenden Ansprüche, wobei der Schlauch (T) einen Innendurchmesser in der Größenordnung von 44 mm und eine Dicke in der Größenordnung von 1 mm - 5 mm aufweist, wobei der Einsatz (5) sich über eine Länge in der Größenordnung von 37 mm erstreckt, wobei der externe Ring (3) sich über eine Länge in der Größenordnung von 10 mm erstreckt, und wobei das Ansatzstück (E) einen Außendurchmesser in der Größenordnung von 42 mm aufweist.
